# EUROPÄISCHE PATENTSCHRIFT

(11) **EP 1 415 694 B1**
(45) Veröffentlichungstag und Bekanntmachung des Hinweises auf die Patenterteilung: **17.02.2010**
(21) Anmeldenummer: 03405700.0
(22) Anmeldetag: 26.09.2003
(51) Int. Cl.: B01D 3/00

(54) **Einrichtung in einer verfahrenstechnischen Kolonne**
Device in a column for a technical process
Dispositif dans une colonne pour un procédé technique

(30) Priorität: 23.10.2002 EP 02405911
(43) Veröffentlichungstag der Anmeldung: 06.05.2004
(73) Patentinhaber: Sulzer Chemtech AG, 8404 Winterthur (CH)
(72) Erfinder: Fehr, Emil, 8415 Berg am Irchel (CH); Keller, Bruno, 8355 Aadorf (CH); Van Leeuwen, Wilhelmus Cornelis, 4043 PD Opheusden (NL); Heggen, John, 4053 IJzendoom (NL)
(74) Vertreter: Sulzer Management AG

(56) Entgegenhaltungen:
- EP-A- 1 260 257
- US-A- 5 501 079

## Beschreibung

Die Erfindung betrifft eine Einrichtung in einer verfahrenstechnischen Kolonne gemäss Oberbegriff von Anspruch 1 sowie eine Kolonne mit einer solchen Einrichtung. Unter einer "verfahrenstechnischen Kolonne" wird beispielsweise eine Trennkolonne mit einer geordneten Packung oder eine Bodenkolonne verstanden.

In einer Trennkolonne, die zur Durchführung einer Stofftrennung, beispielsweise Destillation, eine geordnete Packung enthält und die eine besondere Form einer verfahrenstechnischen Kolonne darstellt, findet zwischen einer als Rieselfilm fliessenden Flüssigkeit und einer im Gegenstrom strömenden Dampfphase ein Stoff- und Wärmeaustausch statt. Damit sich eine optimale Stofftrennung ergibt, muss die Flüssigkeit mittels Verteilern homogen über den Kolonnenquerschnitt verteilt auf die Packung aufgegeben werden. Bei der Herstellung von grossen Kolonnen stellt der Hersteller den Flüssigkeitsverteiler in einer Versuchsanlage auf, um die Verteilgüte auszutesten und allenfalls nötige Korrekturen anzubringen. Für den Transport des Flüssigkeitsverteilers und dessen Einbau in die Kolonne ist es zweckmässig, den Verteiler in handliche Komponenten zu zerlegen. Ein Flüssigkeitsverteiler, der aus einem Hauptkanal und an diesen angeschlossenen Nebenkanälen besteht, wird daher so konstruiert, dass die Nebenkanälen mittels lösbarer Verbindungsmittel - nämlich mit Schrauben - an den Hauptkanal montierbar sind. Durch Lösen der Schrauben lässt sich der Verteiler zerlegen.

Aus der EP1260257 A1 ist auch bekannt, eine lösbare Schnapp- oder Steckverbindung vorzusehen, mittels welcher ein auf den Nebenkanal aufgesetztes Führungsorgan an den Seitenwänden des Nebenkanals fixiert werden kann.

Auch bei anderen Einrichtungen in verfahrenstechnischen Kolonnen, die sehr gross sind, ist es wegen den oben genannten Gründen oder auch aus anderen Gründen vorteilhaft, Komponenten vorzusehen, die sich durch Verschraubungen lösbar verbinden lassen. Eine solche Einrichtung kann beispielsweise ein Einbauelement sein, in dem ein Flüssigkeitsammler mit einem Flüssigkeitsverteiler kombiniert ist. Der Flüssigkeitsammler kann aus Lamellen zusammengesetzt sein, die auf einer Trägerstruktur montiert sind. Auch hier werden Verschraubungen für den Zusammenbau verwendet. Eine weitere derartige Einrichtung kann ein Ablaufschacht (engl. "downcomer") in einer Bodenkolonne sein.

Aufgabe der Erfindung ist es, eine Einrichtung für den Einbau in eine verfahrenstechnische Kolonnezu schaffen, die aus Komponenten zusammensetzbar ist und die sowohl eine Montage als auch eine Demontage - eine Zerlegung in einzelne Komponenten - auf zeitsparende Weise erlaubt. Die Demontage sowie eine spätere Remontage muss ohne ein zeitaufwändiges Lösen von Schrauben bzw. Verbinden mit Schrauben durchführbar sein. Diese Aufgabe wird durch die im Anspruch 1 definierten Einrichtung gelöst.

Die Einrichtung ist in einer verfahrenstechnischen Kolonne angeordnet und dient zum Leiten von Flüssigkeit. Diese Einrichtung umfasst mindestens zwei aus Blech gefertigte, lösbar mit einander verbundene Blechteile. Im ersten Blechteil ist eine Ausnehmung und im zweiten Blechteil eine in die Ausnehmung passende Erhebung angeordnet. Die beiden ersten und zweiten Blechteile sind durch eine Verhakung zwischen der Ausnehmung und der Erhebung in einer gesicherten Position gehalten. Die Ausnehmung und die Erhebung bilden ein Paar und die ersten und zweiten Blechteile weisen in Umgebungen des Paars ebene, aufeinander liegende Bereiche auf. Im Folgenden wird das Paar von Ausnehmung und Erhebung kurz als "Klickverbindung" bezeichnet. Eine Begründung dieser Bezeichnung folgt im Zusammenhang mit der Beschreibung der Zeichnungen.

In der erfindungsgemässen Einrichtung erscheinen die Klickverbindungen anstelle von Verschraubungen, die nach dem Stand der Technik üblich sind. Diese Klickverbindungen können mit Vorteil auch dazu verwendet werden, Verbindungen zwischen Wandstücken herzustellen, die üblicherweise durch Schweissen zusammengefügt werden. Bei solchen Verbindungen braucht eine Demontierbarkeit nicht vorgesehen zu sein. In einem Extremfall besteht eine solche Einrichtung aus zwei Blechstreifen, die durch eine Klickverbindung miteinander verbunden sind, wobei in diesem Fall das in Anspruch 1 genannte Merkmal zusätzlich vorgesehen sein muss.

Die abhängigen Ansprüche 2 und 3 betreffen vorteilhafte Ausführungsformen eerfindungsgemässen Einrichtung. Kolonnen mit Einrichtungen gemäss den Ansprüchen 1 bis 3 sind Gegenstand der Ansprüche 4 bis 8.

Nachfolgend wird die Erfindung anhand der Zeichnungen erläutert. Es zeigen:
- Fig. 1: einen oberen Abschnitt einer verfahrenstechnischen Kolonne, die eine Packung enthält,
- Fig. 2: einen Flüssigkeitsverteiler zu der Kolonne der Fig. 1,
- Fig. 3: ausschnittsweise einen Trägerbalken des erfindungsgemäss ausgebildeten Flüssigkeitsverteilers der Fig. 2, der Klickverbindungen aufweist,
- Fig. 4: ein Detail zum Trägerbalken der Fig. 3,
- Fig. 5: einen Schnitt durch eine geschlossene Klickverbindung, die aus zwei Blechteilen besteht,
- Fig. 6: ein Blechteil - Blechteil einer ersten Art - zu einer varianten Form der in Fig. 5 gezeigten Klickverbindung,
- Fig. 7: einen Teil eines besonderen Flüssigkeitsverteilers, der erfindungsgemäss ausgebildet ist,
- Fig. 8: eine perspektivische Ansicht einer geschlossenen Klickverbindung,
- Fig. 9: einen Teil einer Wanne oder Kanals, der an einer Stirnseite ein mit Klickverbindungen befestigtes Wandstück aufweist,
- Fig. 10: eine ähnliche Konstruktion wie in Fig. 9 für einen Verteilkanal eines Flüssigkeitsverteilers, wobei die Klickverbindungen offen sind,
- Fig. 11: Endbereiche zweier Blechstreifen oder Blechstücke, die mit zwei Klickverbindungen verbindbar sind,
- Fig. 12: eine weitere Klickverbindung, nicht erfindungsgemäß,
- Fig. 13: die Klickverbindung der Fig. 12 von der Rückseite gesehen und
- Fig. 14: einen Ablaufschacht einer Bodenkolonne.

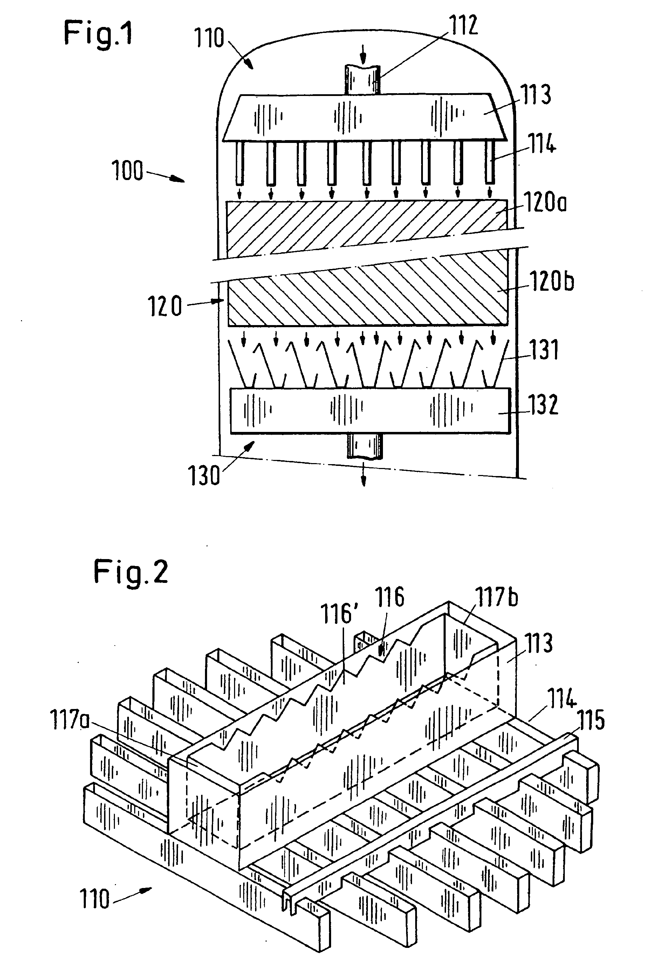

Die in Fig. 1 abschnittsweise mit einem oberen Abschnitt gezeigte Kolonne 100 enthält eine Packung 120, von der ein oberes Ende 120a und ein unteres Ende 120b schematisch dargestellt sind. Die Packung 120 ist beispielsweise eine geordnete Packung, die aus gewellten Metallfolien zusammengesetzt eine "Kreuzkanalstruktur" bildet. Sie ist in der Regel aus einer Vielzahl von Segmenten (nicht dargestellt) aufgebaut und füllt weitgehend den ganzen Querschnitt der Kolonne 100 aus. Über der Packung 120 ist ein Flüssigkeitsverteiler 110 angeordnet. Durch eine Zuführleitung 112 und einen Hauptkanal 113 lässt sich eine Flüssigkeit (durch Pfeile angedeutet) in Nebenkanäle 114 einspeisen und von dort auf das obere Ende 120a der Packung 120 verteilen. Der Hauptkanal 113 und die Nebenkanäle 114 sind in bekannter Weise so ausgebildet, dass die Flüssigkeit gleichmässig über den ganzen Querschnitt der Kolonne 100 und somit über die Packung 120 verteilt wird.

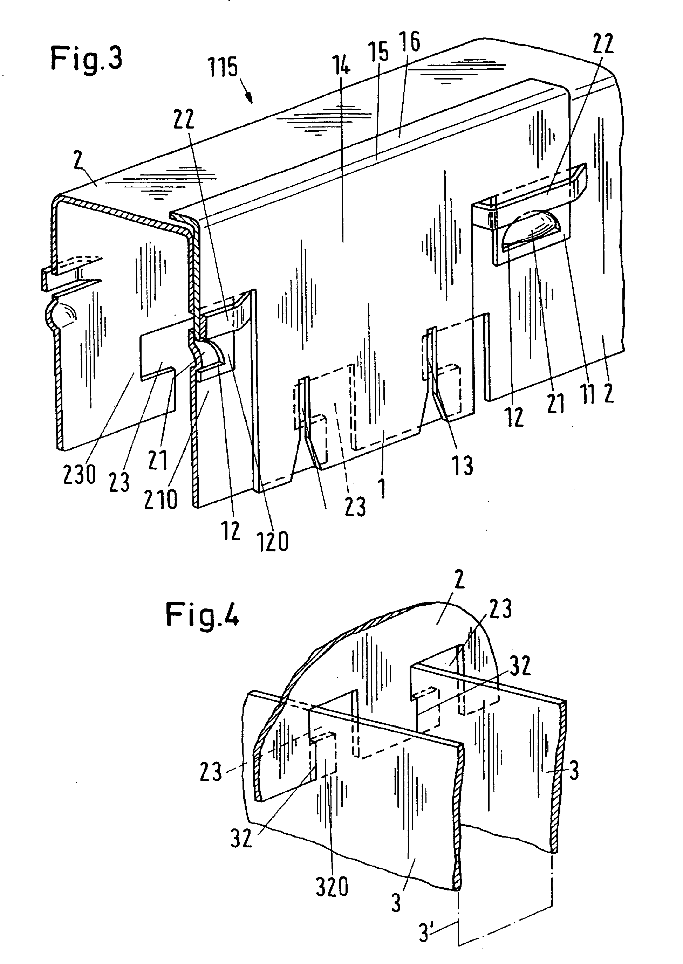

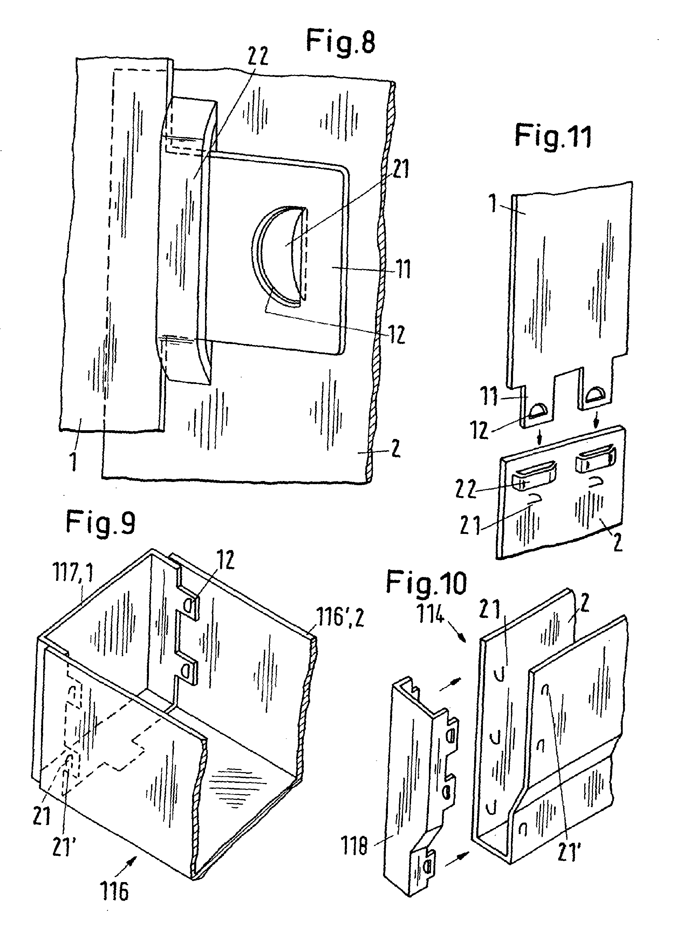

In Fig. 2 ist der Flüssigkeitsverteiler 110 der Kolonne 100 der Fig. 1 als Schrägbild gezeigt. Der Hauptkanal 113 und die Nebenkanäle 114 sind oben offen. Im Hauptkanal 113 ist ein Vorverteilkanal 116 angeordnet, der an Stirnseiten eines trogförmigen Kanalteils 116' durch Wände 117a und 117b abgeschlossen ist. Die Nebenkanäle 114 sind an Trägerbalken 115 (nur einer dargestellt) befestigt. Die erfindungsgemäss ausgebildete Befestigung am Trägerbalken 115 - nämlich die Klickverbindung - ist im Einzelnen anhand der folgenden Figuren 3 bis 6 dargestellt. Die Wände 117a, 117b können separierbare Blechteile sein, die ebenfalls mittels Klickverbindungen an dem Kanalteil 116' befestigt sind (vgl. im Folgenden Fig. 9).

Die Fig. 3 zeigt ausschnittsweise und vergrössert den Trägerbalken 115 des Flüssigkeitsverteilers 110, der ein erstes Beispiel für eine erfindungsgemässe Einrichtung ist, nämlich für eine Einrichtung, die sich in einer verfahrenstechnischen Kolonne 100 einsetzen lässt und zum Leiten von Flüssigkeit vorgesehen ist. Diese Einrichtung 110 umfasst mindestens zwei aus Blech gefertigte, lösbar miteinander verbundene Blechteile. Im ersten Blechteil, ist eine Ausnehmung 12 angeordnet; auf dem zweiten Blechteil 2, ist eine in die Ausnehmung 12 passende Erhebung 21 angeordnet. Das zweite Blechteil 2 wird durch den Trägerbalken 115 gebildet.

Die beiden ersten und zweiten Blechteile 1 und 2 werden durch eine Verhakung zwischen der Ausnehmung 12 und der Erhebung 21 in einer gesicherten Position gehalten. Das durch die Ausnehmung 12 und die Erhebung 21 gebildete Paar wird als Klickverbindung bezeichnet. Denn beim Schliessen der Klickverbindung macht das Blechteil 1, das in der Umgebung der Ausnehmung 12 laschenartig ausgebildet ist, mit dieser laschenartigen Umgebung eine kleine Auslenkbewegung, die entweder ohne eine Verformung oder aber elastisch erfolgt und bei der nach dem Schliessen die Erhebung 21 in der Ausnehmung 12 einrastet. Ist die Auslenkbewegung mit einer elastischen Verformung verbunden, so gibt es in der Regel beim Einrasten ein Klickgeräusch.

Die ersten und zweiten Blechteile 1, 2 weisen in Umgebungen der genannten Paare von Ausnehmung 12 und Erhebung 21 ebene Bereiche 120 bzw. 210 auf, die in der geschlossenen Klickverbindung jeweils aufeinander liegen. Im zweiten Blechteil 2 ist neben der Erhebung 21 des Paars eine weitere Erhebung 22 angeordnet, welche die Form eines flachen Bügels aufweist und welche innerhalb eines ebenen Umgebungsbereichs 220 liegt. Eine Lasche 11 des ersten Blechteils 1 wird beim Schliessen der Klickverbindung zwischen den Bügel 22 und dessen ebenen Umgebungsbereich 220 eingeschoben. Die Erhebung 21 ist im Bereich der eingeschobenen Lasche 11 angeordnet.

Das zweite Blechteil 2 weist hakenartige, in Ebenen 230 liegende Ausnehmungen 23 auf. Ein drittes Blechteil 3 - siehe Fig. 4 - weist schlitzförmige Durchbrüche 32 in ebenen Abschnitten 320 auf. Das dritte Blechteil 3 ist beispielsweise durch die Seitenwände des Nebenkanals 114 (siehe Fig. 2) gegeben. Die Ebenen 230 der hakenartigen Ausnehmungen 23 sind quer zu den ebenen Abschnitten 320 der schlitzförmigen Durchbrüche 32 angeordnet. Das dritte Blechteil 3 ist mit den schlitzförmigen Durchbrüchen 32 an den hakenartigen Ausnehmungen 23 des zweiten Blechteils 2 eingehängt. Die strichpunktiert gezeichnete Linie 3' deutet an, dass die beiden Wandstücke des dritten Blechteils 3 zusammenhängend einen Kanal bilden.

Das erste Blechteil 1 - siehe wieder Fig. 3 - weist Schlitze 13 auf, in welche die genannten ebenen Abschnitt 320 des dritten Blechteils 3 eingeschoben sind (nicht dargestellt). Dabei sind die aus jeweils einer Ausnehmung 12 und einer zugeordneten Erhebung 21 bestehenden Paare in dem in Fig. 3 gezeigten verhakten Zustand. Durch das erste Blechteil 1 wird so die Hängeverbindung zwischen dem zweiten Blechteil 2 mit dem dritten Blechteil 3 gesichert.

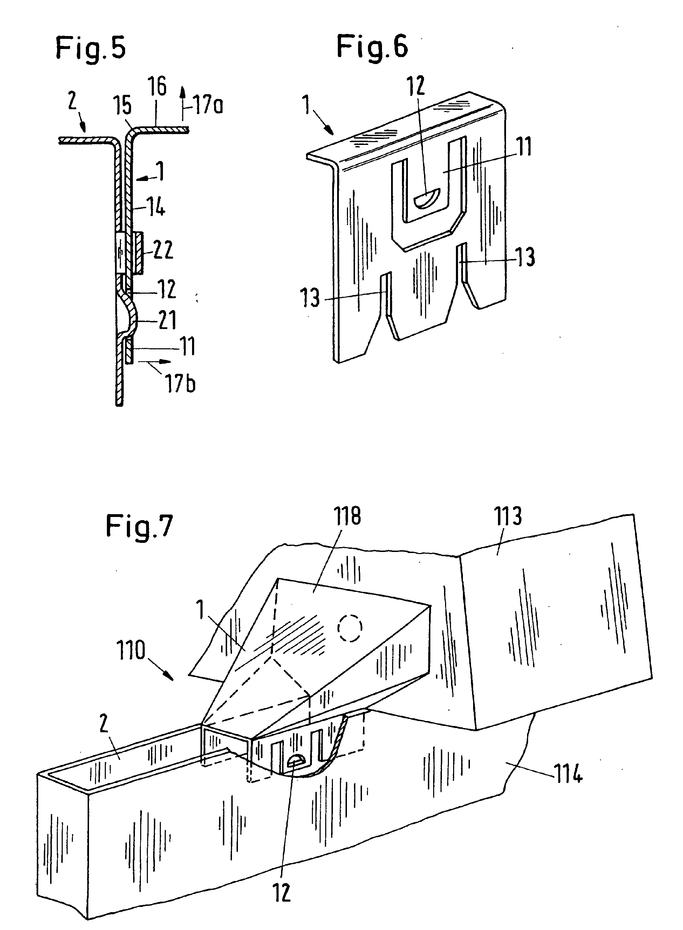

Das in Fig. 3 gezeigte erste Blechteil 1 - siehe auch Fig. 5 - umfasst eine grosse ebene Fläche 14, die in zwei Laschen 11 mit den Ausnehmungen 12 übergeht. Diese grosse Fläche 14 geht ausserdem über eine Biegekante 15 in eine streifenförmige Fläche 16 über. Das zweite Blechteil 2 weist entsprechend zwei Bügel 22 und zwei den Ausnehmungen 12 zugeordnete Erhebungen 21 auf.

Das erste Blechteil 1 lässt sich in zwei Orientierungen anordnen: In der einen Orientierung ist die streifenförmige Fläche 16 von dem zweiten Blechteil 2 weggerichtet (Fig. 5); in der anderen Orientierung ist die streifenförmige Fläche 16 zu dem zweiten Blechteil 2 hingerichtet (Fig. 3). Wird in der Orientierung, die in Fig. 5 gezeigt ist, am Streifen 16 nach oben gezogen (Pfeil 17a), so entsteht eine Kippbewegung (Pfeil 17b), durch die die Ausnehmung 12 aus dem Wirkbereich der Erhebung 22 weggekippt wird. So löst sich durch das Ziehen in Richtung des Pfeils 17a das erste Blechteil 1 ohne besonderen Aufwand aus der Verhakung und kann leicht entfernt werden. Bei der anderen Orientierung, Fig. 3, ergibt sich keine entsprechende Kippbewegung: Das erste Blechteil 1 ist sicher verhakt. Daher eignet sich diese zweite Orientierung für eine definitive Montage, während die erste Orientierung für eine provisorische Montage zu Testzwecken (vgl. Einleitung) vorteilhaft ist. Selbstverständlich sind auch nach einer definitive Montage die Klickverbindungen immer noch lösbar (mittels eines Werkzeugs oder aufgrund einer Fingerfertigkeit des Monteurs).

In Fig. 1 ist ausser dem Flüssigkeitsverteiler 110 auch ein Sammler 130 dargestellt, der unter dem unteren Ende 120b der Packung 120 angeordnet ist. Auf einer Tragkonstruktion 132 sind Lamellen 131 angebracht. Die Verbindung zwischen den Lamellen 131 und der Tragkonstruktion 132 kann auch mit Klickverbindungen hergestellt sein; der Flüssigkeitssammler 130 ist somit ein weiteres Beispiel einer Einrichtung gemäss der Erfindung. Die Tragkonstruktion 132 ist mit Vorteil als Sammelkanal ausgebildet, der die mit den Lamellen 131 gesammelte Flüssigkeit zu einem zentralen Ablauf 133 leitet, durch den die Flüssigkeit in einen weiteren Verteiler (nicht dargestellt) einspeisbar ist.

Fig. 6 zeigt ein erstes Blechteil 1 zu einer varianten Form der in Fig. 5 gezeigten Klickverbindung. Hier wird die Klickverbindung nur durch ein Paar von Erhebung 21 und Ausnehmung 12 gebildet. Die erste Variante (Fig. 3) mit zwei solchen Paaren ist besser zu handhaben und muss weniger präzis gefertigt sein.

Fig. 7 zeigt einen Teil eines erfindungsgemäss ausgebildeten Flüssigkeitsverteilers 110, der ein besonderes Ausflusssystem an den Seitenwänden des Hauptkanals 113 aufweist. Dieses Ausflusssystem umfasst Führungsorgane 118, mit denen die zu verteilende Flüssigkeit aus dem Hauptkanal 113 in die Nebenkanäle 114 geleitet wird. Die Führungsorgane 118 sind jeweils mittels zweier Klickverbindungen an den Seitenwänden der Nebenkanäle 114 fixiert. Es ist von einer Klickverbindung nur die Ausnehmung 12 gezeigt. Die entsprechende Erhebung 21 und ein Bügel 22 (siehe Fig. 3), der nicht notwendigerweise vorhanden sein muss, befinden sich auf einem in der Darstellung weggebrochenen Wandstück des Nebenkanals 114. Mit den Bezeichnungen ausgedrückt, die zur Definition der erfindungsgemässen Einrichtung verwendet worden sind, ist das Führungsorgan 118 das erste Blechteil 1 und der Nebenkanal 114 das zweite Blechteil 2.

Fig. 8 zeigt in perspektivischer Ansicht eine geschlossene Klickverbindung, durch die das erste Blechteil 1 (mit Lasche 11 und Ausnehmung 12) mit dem zweiten Blechteil 2 (mit Bügel 22 und Erhebung 21) verbunden ist.

Fig. 9 zeigt einen Teil einer Wanne oder Kanals 116, der an einer Stirnseite ein mit Klickverbindungen befestigtes Wandstück 117 aufweist. Dieser Kanal 116 kann beispielsweise ein Vorverteilkanal sein, der innerhalb des in Fig. 2 dargestellten Hauptkanals 113 angeordnet ist und der an den Stirnseiten des trogförmigen Kanalteils 116' durch das Wandstück 117 abgeschlossen wird. Es sind nur die Ausnehmungen 12 und Erhebungen 21 der Klickverbindungen angedeutet, wobei die Erhebungen 21 auf der Aussenseite der Kanalteils 116' als Vertiefungen 21' erscheinen. Vorteilhafterweise werden auch Bügel 22 (nicht dargestellt) als Komponenten der Klickverbindungen vorgesehen.

Fig. 10 zeigt eine ähnliche Konstruktion wie Fig. 9 für einen Verteilkanal 114 eines Flüssigkeitsverteilers. Eine Seitenwand 118, die in einem separierten Zustand dargestellt ist, lässt sich mit Klickverbindungen an der Wandung des Verteilkanals 114 montieren.

Fig. 11 zeigt Endbereiche zweier Blechstreifen oder ersten und zweiten Blechteile 1 und 2, die mit zwei Klickverbindungen 11, 12, 21, 22 verbindbar sind.

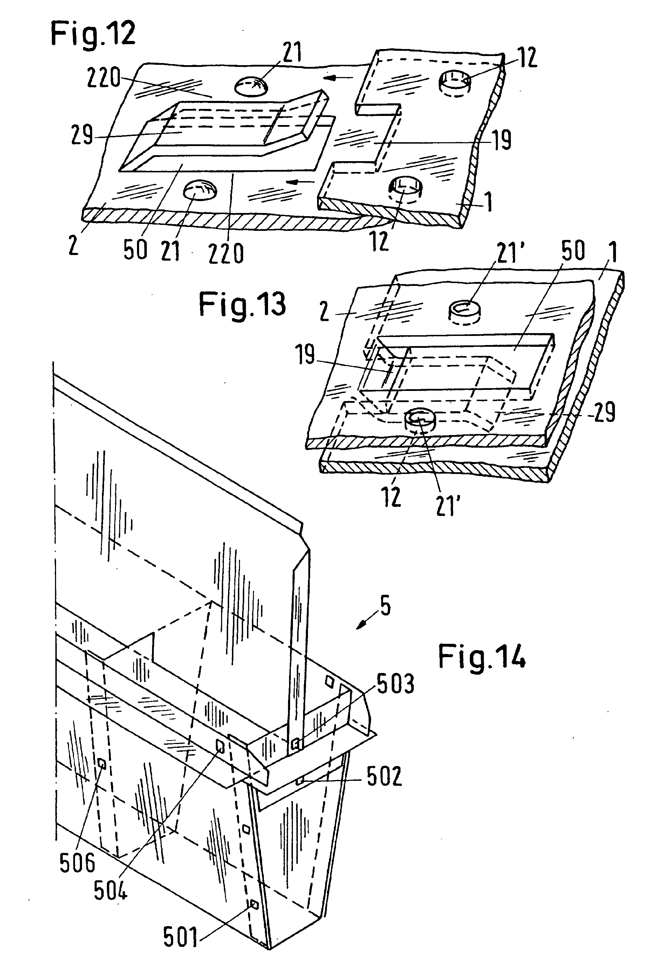

In der Fig. 12 ist eine weitere Klickverbindung dargestellt. Bei dieser Ausführungsform ist eine rechteckige oder angenähert rechteckige Fläche 50 in eine Lasche 29 umgeformt. Diese Lasche 29 ist federelastisch auslenkbar. Sie ist eine weitere Erhebung im Blechteil 2 der zweiten Art neben der Erhebung 21, die innerhalb eines ebenen Umgebungsbereichs 220 der Lasche 29 liegt. Ein flaches Stück des ersten Blechteils 1 kann zwischen die Lasche 29 und deren ebenen Umgebungsbereich 220 in Richtung der zwei in Fig. 12 eingezeichneten Pfeile eingeschoben werden. Nach einer Verhakung zwischen der Ausnehmung 12 und der Erhebung 21 ist die Lage des ersten Blechteils 1 weitgehend spielfrei - vorzugsweise unter Einwirkung einer Federkraft der Lasche 29 - festgelegt.

Es liegen zwei Ausnehmungen 12 bzw. Erhebungen 21 vor, die zwei Paare bilden. Das erste Blechteil 1 weist in einem streifenförmigen Bereich zwischen den beiden Ausnehmungen 12 eine weitere, gegen einen Rand des ersten Blechteils 1 offene Ausnehmung 19 auf, in welche die Lasche 29 eingeschoben wird.

In Fig. 13 ist die Klickverbindung der Fig. 12 von der Rückseite gesehen abgebildet. Sie ist als eine rechteckige Vertiefung zu sehen, deren Rand durch das Rechteck 50 gebildet ist. Die Erhebungen 21 erscheinen als Vertiefungen 21'.

In der Ausführungsform der Figuren 12 und 13 ist die Klickverbindung dichter als die Klickverbindung mit den Bügeln 22. Sie eignet sich daher für verschiedene Anwendungen besser, beispielsweise zur Herstellung eines Ablaufschachts für eine Bodenkolonne. Ein solcher Ablaufschacht 5 ist in Fig. 14 dargestellt. Er setzt sich aus diversen Blechteilen zusammenen, die mittels Klickverbindungen 501 bis 504 miteinander verbunden sind. Diese Klickverbindungen 501 bis 504 sind durch kleine Rechtecke dargestellt. Jedes dieser Rechtecke entspricht einer Vertiefung 50, wie sie in Fig. 13 zu sehen ist.

## Patentansprüche

1. Einrichtung in einer verfahrenstechnischenkolonne (100) zum Leiten von Flüssigkeit, welche mindestens zwei aus Blech gefertigte, lösbar mit einander verbundene erste und zweite Blechteile (1, 2) umfasst, wobei eine Klickverbindung zur Verbindung des ersten Blechteils (1) mit dem zweiten Blechteil (2) vorgesehen ist, wobei das erste Blechteil (1) eine Lasche (11) enthält, welche im zusammengebauten Zustand auf dem zweiten Blechteil (2) zu liegen kommt, wobei die Lasche (11) eine Ausnehmung (12) aufweist, wobei auf dem zweiten Blechteil (2) eine Erhebung (21) angeordnet ist, wobei die Erhebung (21) in die Ausnehmung (12) eingreift, wenn das erste Blechteil (1) mit dem zweiten Blechteil (2) verbunden ist, wobei die Lasche (11) relativ zu dem ersten Blechteil (1) auslenkbar ist, sodass sie beim Zusammenbau über die Erhebung (21) schiebbar ist, **dadurch gekennzeichnet, dass** ein Bügel (22) auf dem zweiten Blechteil (2) vorgesehen ist, durch welchen die Lasche (11) beim Zusammenbau hindurch führbar ist, sodass die Lasche (11) in zusammengebautem Zustand durch den Bügel (22) in Kontakt mit dem zweiten Blechteil (2) haltbar ist.

2. Einrichtung nach Anspruch 1, wobei das zweite Blechteil (2) eine hakenartige, in einer Ebene (230) liegende Ausnehmung (23) aufweist, wobei ein drittes Blechteil (3) vorgesehen ist, welches einen schlitzförmigen Durchbruch (32) in einem ebenen Abschnitt (320) aufweist, sodass die Ebene (230) der hakenartigen Ausnehmung (23) quer zum ebenen Abschnitt (320) des schlitzförmigen Durchbruchs (32) angeordnet ist und das dritte Blechteil (3) mit dem schlitzförmigen Durchbruch (32) an der hakenartigen Ausnehmung (23) des zweiten Blechteils (2) eingehängt ist und das erste Blechteil (1) einen Schlitz (13) aufweist, in den der genannte ebene Abschnitt des dritten Blechteils eingeschoben ist, wenn das aus der Ausnehmung (12) und der zugeordneten Erhebung (21) bestehende Paar im verhakten Zustand ist.

3. Einrichtung nach einem der Ansprüche 1 oder 2, wobei das erste Blechteil (1) eine grosse ebene Fläche (14) umfasst, die in die mindestens eine Lasche (11) mit den Ausnehmungen (12) übergeht, wobei diese grosse ebene Fläche(14) über eine Biegekante (15) in eine streifenförmige Fläche (16) übergeht, wobei das zweite Blechteil (2) entsprechend zwei Bügel (22) und zwei den Ausnehmungen zugeordnete Erhebungen (21) aufweist und sich das erste Blechteil (1) in zwei Orientierungen anordnen lässt, wobei in der einen Orientierung die streifenförmige Fläche von dem zweiten Blechteil (2) weggerichtet ist und in der anderen Orientierung die streifenförmige Fläche zu dem zweiten Blechteil (2) hingerichtet ist.

4. Trennkolonne enthaltend eine Packung (120) und eine Einrichtung(110, 114, 116) nach einem der Ansprüche 1 bis 3, wobei die Packung ein oberes Ende (120a) und ein unteres Ende (120b) aufweist, wobei eine Einrichtung nach einem der Ansprüche 1 bis 3 über dem oberen Ende (120a) oder unter dem unteren Ende (120b) angeordnet ist und mittels der Einrichtung Flüssigkeit verteilbar bzw. sammelbar ist.

5. Trennkolonne nach Anspruch 4, wobei unter dem unteren Ende (120b) der Packung (120) ein Sammler (130) angeordnet ist.

6. Trennkolonne nach Anspruch 5, wobei der Sammler (130) aus einer Tragkonstruktion (132) und Lamellen (131) besteht, wobei die Verbindung zwischen den Lamellen (131) und der Tragkonstruktion (132) durch Klickverbindungen nach Anspruch 1 erfolgt.

7. Trennkolonne umfassend eine Einrichtung nach einem der Ansprüche 1 bis 3, wobei die Einrichtung ein Flüssigkeitsverteiler (110) ist, welcher mindestens einen Hauptkanal (113) und eine Vielzahl von Nebenkanälen (114) umfasst, wobei
jeder Nebenkanal(114) ein drittes Blechteil (3) ist, wobei eine Mehrzahl von zweiten Blechteilen (2) Trägerprofile (115) für die Nebenkanäle (114) bilden und eine Mehrzahl von ersten Blechteilen (1) zum Sichern der Verbindungen zwischen den Nebenkanälen (114) und den Trägerprofilen (115) verwendet sind.

8. Trennkolonne nach Anspruch 7, wobei
- jeder Nebenkanal durch eines der zweiten Blechteile (2) gebildet ist und Führungsorgane (118) für aus dem Hauptkanal (113) in die Nebenkanäle(114) zu verteilende Flüssigkeit vorgesehen sind, die jeweils aus einem der ersten Blechteile (1) gebildet sind,
- und/oder ein Vorverteilkanal (116) innerhalb des Hauptkanals angeordnet ist, der aus mindestens jeweils einem ersten Blechteil (1) und einem zweiten Blechteil (2) zusammengesetzt ist.

## Claims

1. A device in a process engineering column (100), for the guiding of liquid, which includes at least two first and second sheet metal parts (1, 2) made of sheet metal and releasably connected to one another, whereby a click connection for connection of the first sheet metal part (1) to the second sheet metal part (2) is foreseen, whereby the first sheet metal part (1) comprises a tab (11), which comes to lie in the assembled state upon the second sheet metal part (2), whereby the tab (11) comprises a recess (12), whereby an elevation (21) is provided on the second sheet metal part (2) whereby the elevation (21) engages into the recess (12), when the first sheet metal part (1) is connected to the second sheet metal part (2), whereby the tab (11) is pivotable relatively to the first sheet metal part (1), such that it can be pushed over the elevation (21) when assembled, **characterised in that** a hoop (22) is foreseen on the second sheet metal part (2), through which the tab (11) is guidable during assembly, such that a contact between the tab (11) and the second sheet metal part (2) by means of the hoop (22) can be made in the assembled state.

2. A device in accordance with claim 1, whereby the second sheet metal part (2) has a hook-like recess (23) lying in a plane (230); in that a third sheet metal part (3) is foreseen which has a slot-like aperture (32) in a planar section (320); such that the plane (230) of the hook-like recess is arranged transversely to the planar section (320) of the slot-like aperture (32); and the third sheet metal part (3) is hung into the hook-like recess (23) of the second sheet metal part (2) by the slot-like aperture (32); and in that the sheet metal part (1) of the first kind has a slot (13) into which the said planar section of the third sheet metal part is pushed when the pair consisting of the recess (12) and of the associated elevation (21) being in the hooked together state.

3. A device in accordance with one of claims 1 or 2, whereby the first sheet metal part (1) includes a large planar area (14) which merges into the at least one tab (11), , with the recesses (12); whereby this large area merges via a bending edge (15) into a strip-shaped area (16); whereby the second sheet metal part (2) accordingly has two hoops (22) and two elevations (21) associated with the recesses; and the first sheet metal part (1) can be arranged in two orientations, with the strip-shaped area being directed away from the second sheet metal part (2) in the one orientation and being directed towards the second sheet metal part (2) in the other orientation.

4. A fractionating column comprising a packing (120) and a device (110, 114, 116) in accordance with any one of claims 1 to 3, whereby the packing has an upper end (120a) and a lower end (120b) whereby a device in accordance with any one of claims 1 to 3 is arranged above the upper end (120a) or below the lower end (120b) and liquid can be distributed and/or collected by means of the device.

5. A fractionating column in accordance with claim 4, wherein a collector (130) is arranged below the lower end (120b) of the packing (120).

6. A fractionating column in accordance with claim 5, whereby the collector (130) consists of a carrying construction (132) and lamellae (131), whereby the connection between the lamellae (131) and the carrying construction (132) is realised by click connections in accordance with claim 1.

7. A column comprising a device in accordance with any one of claims 1 to 3, whereby the device is a liquid distributor (110) which includes at least one main passage (113) and a plurality of secondary passages (114), wherein
each secondary passage (114) is a third sheet metal part (3), whereby a plurality of second sheet metal parts (2) form carrier sections (115) for the secondary passages (114) and a plurality of first sheet metal parts (1) are used for the securing of the connections between the secondary passages (114) and the carrier sections (115).

8. A column in accordance with claim 7, wherein
- each secondary passage is formed from one of the second sheet metal parts (2) and guide members (118) for liquid to be distributed from the main passage (113) into the secondary passages (114) are foreseen, which are formed from one of the first sheet metal parts (1);
- and/or a pre-distribution passage (116) is arranged within the main passage which is put together from at least one of the first sheet metal parts (1) and one of the second sheet metal parts (2).

## Revendications

1. Installation dans une colonne (100) pour un procédé technique pour la conduction de liquide, qui comprend au moins deux, première et deuxième parties de tôle (1, 2) fabriquées en tôle, reliées amoviblement l'une à l'autre, où est prévue une liaison à encliquetage pour relier la première partie de tôle (1) à la deuxième partie de tôle (2), où la première partie de tôle (1) comporte une languette (11) qui, à l'état assemblé, vient à se situer sur la deuxième partie de tôle (2), où la languette (11) présente un évidement (12), où est disposée sur la deuxième partie de tôle (2) une surélévation (21), où la surélévation (21) s'engage dans l'évidement (12) lorsque la première partie de tôle (1) est reliée à la deuxième partie de tôle (2), où la languette (11) peut être déviée relativement à la première partie de tôle (1) de sorte que lors de l'assemblage, elle peut être poussée par-dessus la surélévation (21), **caractérisée en ce qu'**il est prévu un étrier (22) sur la deuxième partie de tôle (2) à travers lequel la languette (11), lors de l'assemblage, peut être passée de sorte que la languette (11), à l'état assemblé, peut être retenue par l'étrier (22) en contact avec la deuxième partie de tôle (2).

2. Installation selon la revendication 1, dans laquelle la deuxième partie de tôle (1) présente un évidement (23) en forme de crochet, situé dans un plan (230), où une troisième partie de tôle (3) est prévue qui présente un perçage en forme de fente (32) dans une section plane (320) de sorte que le plan (230) de l'évidement en forme de crochet (23) est disposé transversalement à la section plane (320) du perçage en forme de fente (32) et que la troisième partie de tôle (3) est accrochée avec le perçage en forme de fente (32) à l'évidement en forme de crochet (23) de la deuxième partie de tôle (2), et la première partie de tôle (1) présente une fente (13) dans laquelle est poussée la section plane précitée de la troisième partie de tôle lorsque la paire formée par l'évidement (12) et la surélévation associée (21) se trouve à l'état verrouillé.

3. Installation selon l'une des revendications 1 ou 2, dans laquelle la première partie de tôle (1) comprend une grande face plane (14) qui rejoint au moins une languette précitée (11) avec les évidements (12), où cette grande face plane (14) rejoint par une arête de pliage (15) une face en forme de bande (16), où la deuxième partie de tôle (2) présente d'une manière correspondante deux étriers (22) et deux surélévations (21) associées aux évidements, et la première partie de tôle (1) peut être disposée selon deux orientations, où dans une orientation, la face en forme de bande est dirigée au loin de la deuxième partie de tôle (2), et dans l'autre orientation, la face en forme de bande est dirigée vers la deuxième partie de tôle (2).

4. Colonne de séparation comportant un garnissage (120) et une installation (110, 114, 116) selon l'une des revendications 1 à 3, où le garnissage présente une extrémité supérieure (120a) et une extrémité inférieure (120b), où une installation selon l'une des revendications 1 à 3 est disposée sur l'extrémité supérieure (120a) ou sous l'extrémité inférieure (120b), et au moyen de l'installation, du liquide peut être réparti respectivement collecté.

5. Colonne de séparation selon la revendication 4, dans laquelle est disposé sous l'extrémité inférieure (120b) du garnissage (120) un collecteur (130).

6. Colonne de séparation selon la revendication 5, dans laquelle le collecteur (130) est constitué d'une construction de support (132) et de lamelles (131), où l'assemblage entre les lamelles (131) et la construction de support (132) a lieu par des liaisons à encliquetage selon la revendication 1.

7. Colonne de séparation comprenant une installation selon l'une des revendications 1 à 3, dans laquelle l'installation est un distributeur de liquide (110) qui comprend au moins un canal principal (113) et une pluralité de canaux secondaires (114), où chaque canal secondaire (114) est une troisième partie de tôle (3), où une pluralité de deuxièmes parties de tôle (2) forme des profilés de support (115) pour les canaux secondaires (114), et une pluralité de premières parties de tôle (1) peuvent être utilisées pour assurer les liaisons entre les canaux secondaires (114) et les profilés de support (115).

8. Colonne de séparation selon la revendication 7, dans laquelle
- chaque canal secondaire est formé par une des deuxièmes parties de tôle (2), et des organes de guidage (118) pour le liquide à répartir du canal principal (113) dans les canaux secondaires (114) sont prévus, qui sont formés respectivement par une des premières parties de tôle (1),
- et/ou un canal de répartition préalable (116) est disposé à l'intérieur du canal principal, qui est constitué d'au moins respectivement une première partie de tôle (1) et d'une deuxième partie de tôle (2) .
